Europäisches Patentamt

European Patent Office

Office européen des brevets

(11) Publication number: **0 064 310**
A2

## (12) EUROPEAN PATENT APPLICATION

(21) Application number: **82200474.3**

(51) Int. Cl.³: **B 65 D 90/08**

(22) Date of filing: **20.04.82**

(30) Priority: **05.05.81 IT 6760281**
**12.11.81 IT 5379181 U**

(43) Date of publication of application:
**10.11.82 Bulletin 82/45**

(84) Designated Contracting States:
**DE FR GB**

(71) Applicant: **A.G. INTERNATIONAL S.p.A.**
**Via Goita, 31**
**I-10042 Nichelino (Torino)(IT)**

(72) Inventor: **Aghemo, Luigi**
**Corso Galileo Galilei, 6**
**Turin(IT)**

(74) Representative: **Lotti, Giorgio**
**c/o Ing. Barzano' & Zanardo S.p.A. Via Cernaia 20**
**I-10122 Torino(IT)**

(54) **Plastics tank.**

(57) A plastics tank constituted by two or more half shells (10) joined together along perimetral flanges (11) which are bent outwards from the tank; along the flanges (11) there are provided uniformly spaced-apart communicating passages (16, 117) into which a plastics material which may be either chemically compatible or incompatible with that of the half shells (10) is injected, the configuration of the passages (16, 117) and the volume occupied by the injected plastics material being such as to prevent the two half shells (10) separating, even if the materials are chemically incompatible.

Fig.1

PLASTICS TANK　　　　　　0064310

DESCRIPTION

This invention relates to a plastics tank.

The tank according to the invention is designed in particular for the automobile industry, i.e. is suitable for containing fuel in the form of petrol, diesel oil or the like for feeding motor vehicles.

This however represents only a preferred use of the tank, which can in fact contain any type of liquid from water to oil or hydrocarbons, and is thus suitable for the most varied applications.

Its automobile application will therefore be described hereinafter by way of example only, without citing any other of the various fields of application, which would in any case represent only a minimum part of the applications for which the tank can effectively be used. At the present time, many tanks are constructed in the form of two or more metal or plastics shells welded along their perimetral flanges. These welds are sometimes made by thermowelding, i.e. by heating the two facing flanges which thus become welded together. This method is particularly used for plastics shells. In other cases, the two facing flanges are made to slide relative to each other by friction, and they thus become welded together. This application is used for metal tanks.

A recent method is the blow moulding of thermoplastic material. This is an operation in which the tank is shaped from a mass of plastics material by blowing air.

These methods however suffer from various drawbacks. In the case of the first two in which two shells are welded together, a perfect seal between the shells is never attained, and they
are imperfectly welded over more or less lengthy portions.
In addition such constructions are rather costly and difficult
to carry out.

In the case of a blow moulded tank, its thickness is never
uniform, precisely because of the characteristics of this operation,
with the result that the tank is weakened in certain portions.

Further problems of presently available tanks are the
difficulty of making them in the most varied shapes which are
sometimes required by necessity, and it is certainly not possible
to obtain many tank configurations by blow moulding.

The object of the invention is to obviate all the aforesaid
drawbacks by providing a tank formed from two plastics half shells
joined along their perimetral flanges into which a plastics
material identical to that of the two half shells or chemically
compatible with them is injected, so that, on cooling, this
material forms a single body with the flanges of the half shells,
thus welding them together perfectly and completely.  If however
the injected plastics material is chemically incompatible with
that of the half shells, on solidifying it provides a mechanical
seal rather than a chemical seal, but which in any case prevents
separation of the two half shells.  A tank can thus be formed
of any required shape and size, even provided with internal baffles,
which is impossible in the case of the aforesaid present-day blow
moulded tanks.  The injection of the welding material ensures a
total and perfect seal along the welding flanges because, as is
known, injected plastics material reaches every cavity and interstice which may be present.  In addition, the half shells can be of constant thickness in all their parts, thus ensuring the required uniformity.

A further obvious advantage is the low cost both because of the material used and the necessary construction time.

These and further objects, which will be more apparent hereinafter, are attained according to the invention by a plastics tank constituted by two or more half shells joined together along perimetral flanges bent outward from the tank, characterised in that along said flanges there are provided uniformly spaced-apart communicating passages into which there is injected a plastics material which may be chemically compatible or incompatible with that of the half shells, the configuration of the passages and the volume occupied by the injected plastics material being such as to prevent separation of the two half shells, even if the materials are chemically incompatible.

Two preferred embodiments of the tank according to the invention are described hereinafter by way of non-limiting example with reference to the accompanying drawings, in which:

Figure 1 is a partial section through a tank according to the invention;

Figure 2 is a section through the tank taken along the welding line of its two constituent half shells;

Figures 3, 4 and 5 are sections on the lines III-III, IV-IV and V-V of Figure 2 respectively;

Figure 6 is a partial section through a second embodiment of a tank according to the invention;

Figure 7 is a section through the tank of Figure 6 taken along the welding line of its two constituent half shells;

Figures 8 and 9 are sections on the lines VIII-VIII and IX-IX of Figure 7 respectively.

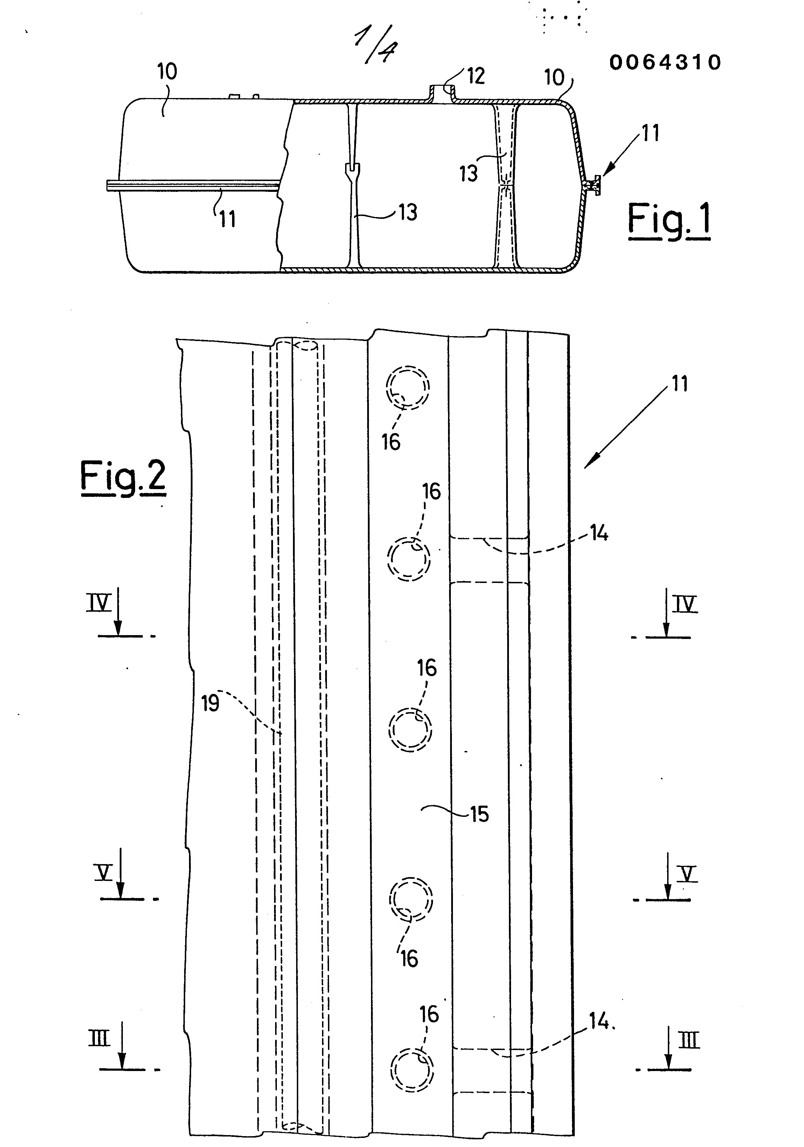

A description will firstly be given of the embodiment of Figures 1 to 5.  As stated, the tank illustrated is of the type for automobile use, but this configuration is given by way of example only.

Two half shells 10 are joined together along their outwardly bent perimetral flanges 11.

The tank also comprises, in known manner, a liquid inlet port 12 and baffles 13 to prevent shaking of the liquid (in this case fuel).

As can be seen in the subsequent figures, the flanges 11 are variously shaped along their perimeter in order to form different configurations when fitted together.

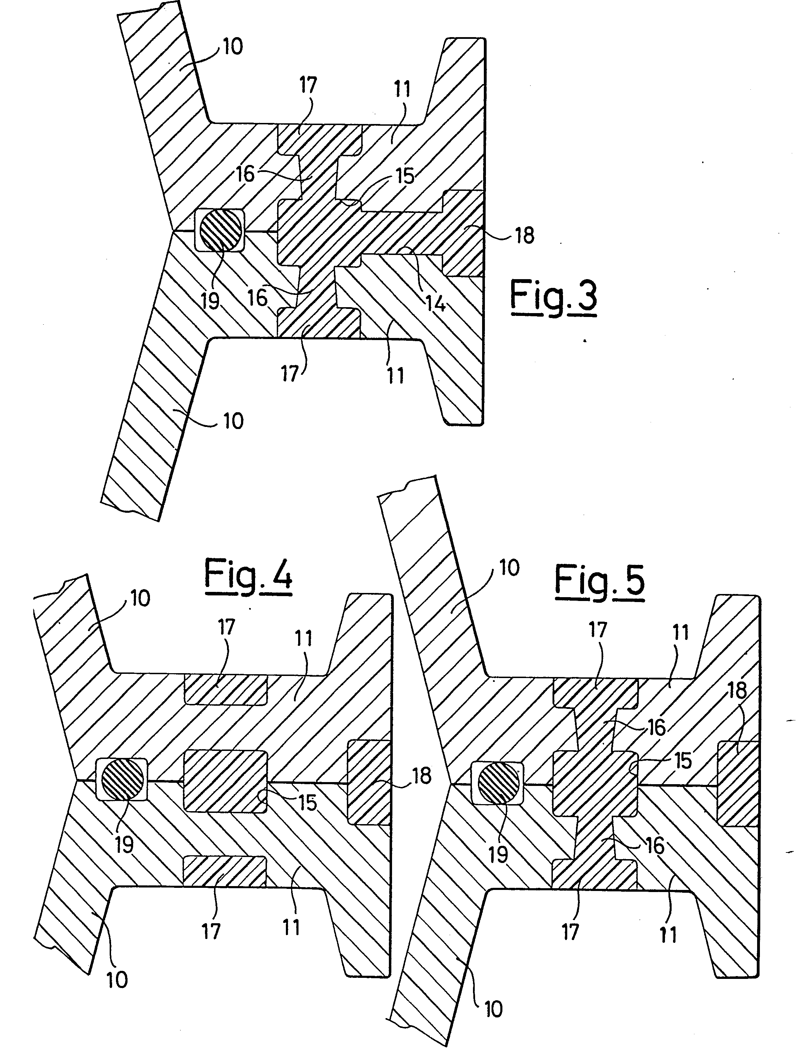

Firstly, in Figure 3 it can be seen that the bent flanges 11 are configured to provide a first duct 14 which opens into a second duct 15, from which two further diametrically opposing ducts 16 extend.  By this means a continuous straight passage is provided, comprising three paths communicating with the outside.

The second section of Figure 5 is identical to the preceding, with the exception of the duct 14, so that the passage is recti-linear along the ducts 16 by way of the central duct 15.

The third section of Figure 4 shows only the duct 15, which is thus dead in that no portion thereof communicates with the outside.

Figure 2 shows the pattern and arrangement of the various ducts along the perimeter of the flanges 11.

As can be seen, the ducts 14 are disposed at every three ducts 16, and all converge towards the central duct 15 which, in contrast to the others, extends along the entire perimeter of the flanges 11.

Having thus fitted the two half shells 10 together as shown in Figure 1, the tank is inserted into a mould which reproduces the bent perimetral flanges 11, and plastics material is injected of a type identical with that of the tank or which is chemically compatible with it.

The material is injected through the ducts 14, so that it fills the perimetral duct 15 and all the lateral ducts 16 which extend from it. The mould is constructed with cavities in those positions where said ducts 16 open, so that the material is able to flow out and form an external head 17.

A head 18 can also form at the front of the feed duct 14, and forms a perimetral seam as it is contained in an appropriate slot provided between the flanges 11.

When cooled and hardened, the injected material forms a single body with the material of the half shells, i.e. an integral material chemically bonded to that of the tank instead of a welding material, thus providing a permanent bond between the two flanges.

By virtue of the heads 17, the two flanges can never separate even if for various reasons the materials were not perfectly bonded together. In this respect, as the heads 17 abut against the flanges 11 and are diametrically opposite, they react effectively against any accidental attempt to separate the two half shells.

A further guarantee of sealing can be provided by the presence of a rubber ring or cord 19 inserted into a suitable perimetral compartment provided between the two flanges 11, however it will be understood that this provides a simple formal guarantee in that if the injected material is carefully chosen from those which are most compatible with the material of the half shells, a bond is obtained between them which not only resists any force and stress but provides a perfect seal at all points.

The shapes, dimensions and number of ducts provided along the perimetral flanges are obviously variable according to the type of tank and the applicational requirements.

In this respect, frusto-conical flared ducts 16 can be made so as to avoid the use of heads 17, or again their number and frequency along the perimeter can be varied so as to further strengthen the structure.

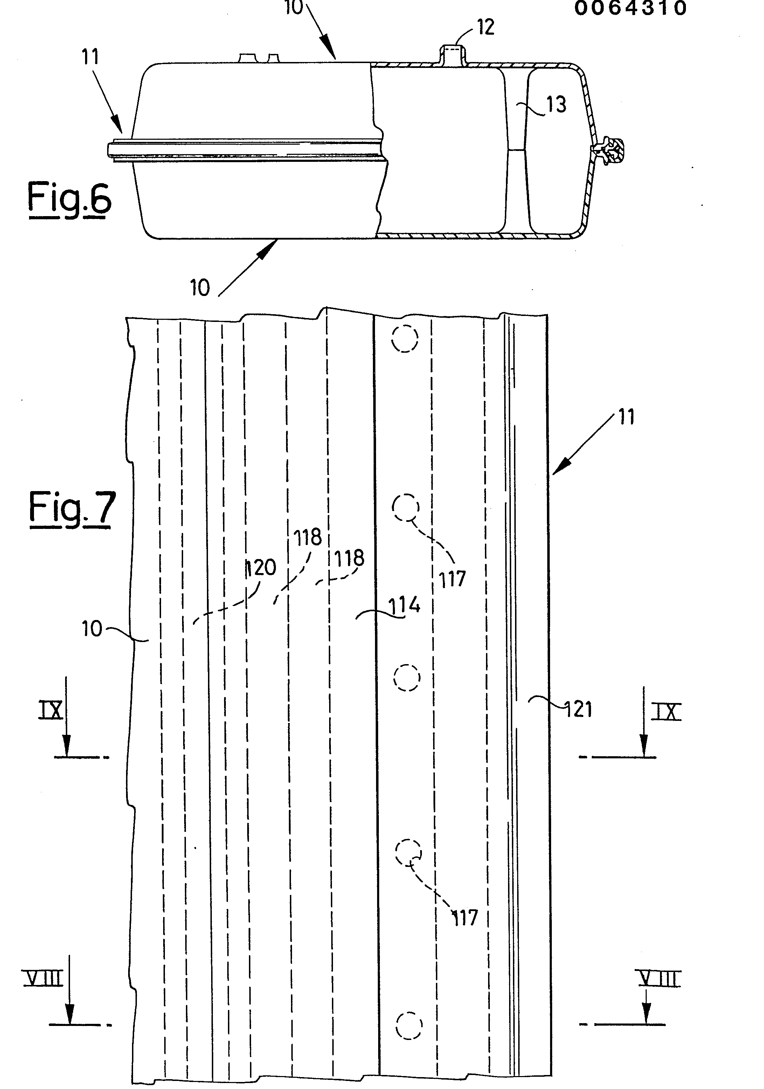

In the second embodiment shown in Figures 6 to 9, the same reference numerals are used for the half shells 10, flanges 11, port 12 and baffles 13, as shown in Figure 6, these being elements identical to those described in the first embodiment.

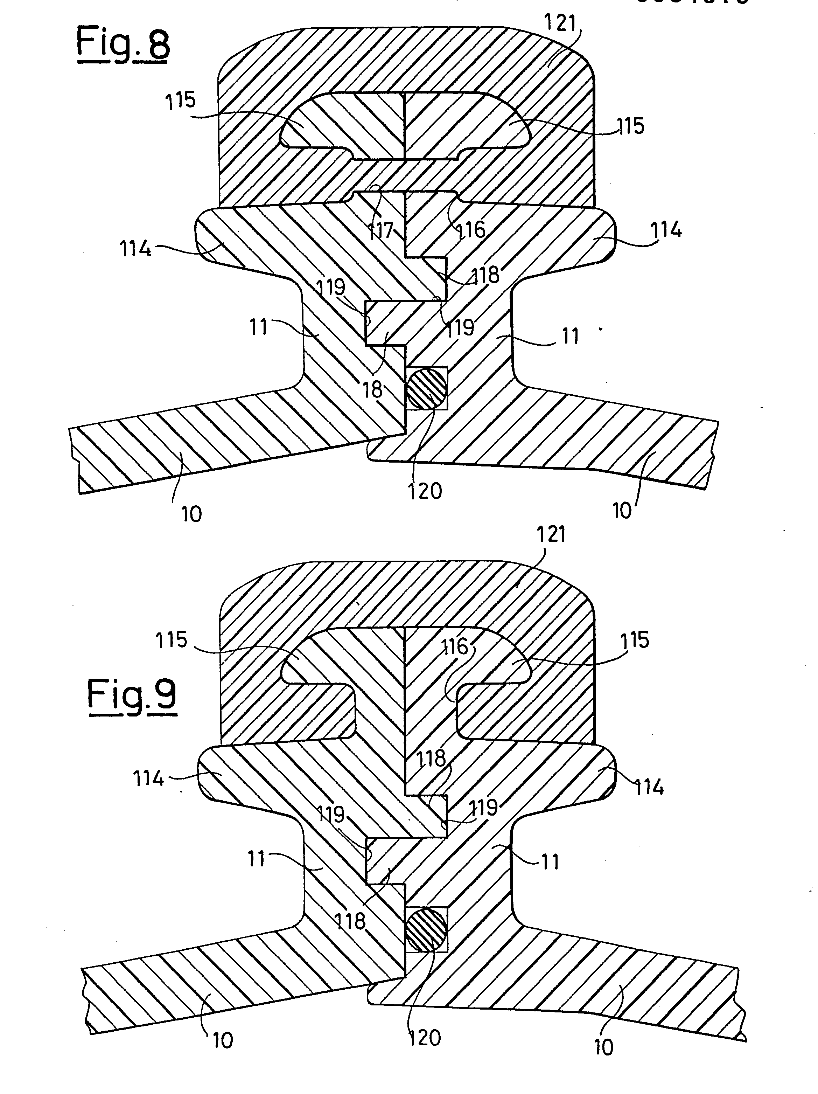

The flanges 11 are in this case variously shaped along their perimeter in order to provide different configurations as shown in Figures 8 and 9 when fitted together.

Each flange 11 comprises a first longitudinal bent portion 114 and a second bent portion 115, which is also longitudinal but of lesser width than the preceding and provided at the end of each flange 11.  Between the bent portions 114 and 115 there is formed a constriction 116 through which through passages 117 are provided at predetermined distances apart (Figure 7).

In addition, each flange 11 comprises on that side facing the other flange a projection 118 and a cavity 119, both extending along the entire length of the flanges and designed to provide perfect fitting together of the two half shells 10 during assembly.

Finally, a perimetral rubber ring or cord 120 is inserted into a suitable compartment provided between the two flanges 11 for the reasons described hereinafter.

Having thus fitted the two half shells 10 together as shown in the figures, i.e. by inserting the projection 118 of one flange 11 into the cavity 119 of the other flange 11, a perfect fit is obtained between the two half shells which prevents them from sliding relative to each other.

At this point, the tank is inserted into a mould into which is then injected the plastics material which may be identical, chemically compatible or chemically incompatible with that of the tank. The mould is constructed such that the material fills all the passages 117 and forms an external covering 120 which extends over the entire perimeter of the flanges 11 and wraps the flanges at the bent portions 115.

Thus, when viewed in cross-section, a covering 121 of plastics material is obtained which is of an annularly closed pattern at those flange portions provided with passages 117 (Figure 8), whereas it is of an annularly open pattern at those portions without passages 117 (Figure 9).

When cooled and hardened, the injected material forms a single body with that of the half shells if the materials are identical or chemically compatible. The injected material thus represents an integral material chemically bonded to that of the tank rather than only a welding material, thus forming a permanent bond between the two flanges. If however the two materials are not chemically compatible, a purely mechanical seal and connection are obtained, in that the covering 121 wraps the bent portions 115, thus preventing any movement between the flanges 11 either in the sense of withdrawal or of relative sliding. The projections 118 contribute to increasing the resistance to relative sliding, while the rubber ring 120 contributes to increasing the seal against leakage of liquid contained in the tank.

It will however be apparent that this merely represents a simple formal guarantee in that if the injected material is carefully chosen from those most compatible with the material of the half shells, a bond is obtained between them which not only resists any force and stress but provides a perfect seal along the entire periphery.

The shapes, sizes and number of passages 117 provided along the flanges 11 can obviously be varied according to the type of tank and the applicational requirements. Thus, the shape of the covering 121 of injected material is also variable according to the various types of tank and the moulds used.

- 1 -

0064310

WHAT WE CLAIM IS

1. A plastics tank constituted by two or more half shells (10) joined together along perimetral flanges (11) bent outwards from the tank, characterised in that along said flanges (11) there are provided uniformly spaced-apart communicating passages (16, 117) into which there is injected a plastics material which may be chemically compatible or incompatible with that of the half shells (10), the configuration of the passages (16, 117) and the volume occupied by the injected plastics material being such as to prevent separation of the two half shells (10) even if the materials are chemically incompatible.

2. A tank as claimed in claim 1, characterised in that the passages (16) are connected together by a central duct (15) extending along the entire perimeter of said flanges, said duct being connected externally not only to said passages (16) but also to further passages (14) for feeding plastics material and provided between the flanges (11).

3. A tank as claimed in claim 1, characterised in that the passages (16) are formed from pairs of ducts variously spaced apart along the perimeter of the flanges (11), each pair being formed from ducts which each extend in a direction diametrically opposite to the central duct (15) towards the outside of each flange (11) in which they are provided.

4. A tank as claimed in claims 2 and 3, characterised in that the number of plastics material feed passages (14) is less than said pairs of passages (16), but each passage (14) lies in the same plane as a pair of passages (16) in order to form three mutually orthogonal paths, of which the central one is the central duct (15) which also constitutes their connection.

5. A tank as claimed in claim 3, characterised in that each passage (16) of each pair is flared divergently towards the outside of the flanges.

6. A tank as claimed in claim 3, characterised in that the injected plastics material forms a head (17) on the outside of each pair of passages (16), and which remains in line with the flange.

7. A tank as claimed in claim 1, characterised in that the passages (117) are through passages and the plastics material is injected into them and about the ends of the flanges over their entire length.

8. A tank as claimed in claim 7, characterised in that in that portion of each flange (11) lying between the passages (117) and the end there are provided lateral bent portions (115) extending over the entire length of the flanges and perfectly reproduced by the injected material.

9. A tank as claimed in claims 7 and 8, characterised in that the passages (117) are provided in constrictions (116) formed between said outer bent portions (115) and further inner lateral bent portions (114) of greater width.

10. A tank as claimed in claims 7 and 9, characterised in that the injected material covers the end of the flanges and abuts against said inner lateral bent portions (114).

11. A tank as claimed in claim 7, characterised in that along the facing sides of the two flanges there are provided projections (118) and cavities (119) which are arranged to mate when the two half shells (10) are fitted together.

12. A tank as claimed in claim 1, characterised in that a rubber ring (120) is inserted into a compartment provided between the bent flanges (11) of the half shells (10) and extending along the entire perimeter thereof.

0064310

Fig.1

Fig.2

0064310

Fig.3

Fig.4

Fig.5

0064310

**Fig.6**

10

11

12

13

**Fig.7**

10

120

118

118

117

114

117

11

121

IX

IX

VIII

VIII

Fig. 8

Fig. 9